# EUROPÄISCHE PATENTSCHRIFT

(11) **EP 4 331 342 B1**
(45) Veröffentlichungstag und Bekanntmachung des Hinweises auf die Patenterteilung: **08.04.2026**
(21) Anmeldenummer: 23179447.0
(22) Anmeldetag: 15.06.2023
(51) Int. Cl.: A01D 41/127, A01D 43/08, G05B 13/04

(54) **LANDWIRTSCHAFTLICHE ARBEITSMASCHINE MIT FAHRERASSISTENZSYSTEM**
AGRICULTURAL WORKING MACHINE WITH DRIVER ASSISTANCE SYSTEM
MACHINE DE TRAVAIL AGRICOLE DOTÉE D'UN SYSTÈME D'AIDE À LA CONDUITE

(30) Priorität: 26.08.2022 DE 102022121701; 12.01.2023 DE 102023100640
(43) Veröffentlichungstag der Anmeldung: 06.03.2024
(73) Patentinhaber: CLAAS Selbstfahrende Erntemaschinen GmbH, 33428 Harsewinkel (DE)
(72) Erfinder: Thiesmann, Waldemar, 49080 Osnabrück (DE); Warkentin, Heinrich, 33330 Gütersloh (DE); Vöcking, Henner, 33397 Rietberg (DE); Bormann, Bastian, 33334 Gütersloh (DE); Altaleb, Mohamed, 32657 Lemgo (DE)
(74) Vertreter: CLAAS Gruppe

(56) Entgegenhaltungen:
- EP-A1- 2 728 523
- EP-A2- 2 401 904
- EP-A2- 2 687 922
- US-A1- 2022 110 256

## Beschreibung

Die vorliegende Erfindung betrifft eine landwirtschaftliche Arbeitsmaschine ein Fahrerassistenzsystem umfassend, welches zur optimierten Ermittlung von Arbeitsparametern der landwirtschaftlichen Arbeitsmaschine eingerichtet ist gemäß dem Oberbegriff von Anspruch 1.

Im Vordergrund stehen vorliegend landwirtschaftliche Arbeitsmaschinen aller Art. Dies betrifft vorzugsweise Erntemaschinen wie Mähdrescher und Feldhäcksler, aber auch Zugmaschinen, insbesondere Traktoren.

Landwirtschaftliche Arbeitsmaschinen werden mittels einer Vielzahl von Arbeitsparametern an ihre jeweilige landwirtschaftliche Arbeitsaufgabe angepasst. Bei diesen Arbeitsparametern handelt es sich beispielsweise um eine Motordrehzahl, eine Dreschtrommeldrehzahl, ein Zapfwellendrehmoment, den Spalt eines Korncrackers, die Fahrgeschwindigkeit und dergleichen. Es sind diverse Ansätze zur Optimierung dieser Arbeitsparameter hinsichtlich bestimmter Ziele bekannt. Diese Optimierung kann vom Benutzer, der insbesondere der Fahrer ist, selbst oder in Zusammenarbeit mit einem Fahrerassistenzsystem vorgenommen werden. Sie kann auch vollautomatisiert ablaufen.

Bei einem bekannten Ansatz kann der Benutzer dem Fahrerassistenzsystem Strategievorgaben machen, also beispielsweise eine vordefinierte Strategie auswählen oder mehrere konkurrierende Optimierungsziele gewichten. Das Fahrerassistenzsystem setzt diese Strategievorgaben mithilfe einer Anwendungsvorschrift, die beispielsweise kennfeldbasiert sein kann, in optimierte Arbeitsparameter um.

Die EP 2 401 904 A2 beschreibt, wie bei aktuellen landwirtschaftlichen Arbeitsmaschinen aus Strategievorgaben (insbesondere die dortigen Auswahlkriterien und Optimierungskriterien) eines Benutzers der landwirtschaftlichen Arbeitsmaschine über eine Anwendungsvorschrift (dort insbesondere die Kennlinien in Kombination mit den Regelautomaten) optimierte Arbeitsparameter ermittelt werden. Auch ist bekannt, dass die Anwendungsvorschrift prinzipiell an den lokalen Kontext angepasst werden kann, indem zum Beispiel ein externer Berater hinzugezogen wird, der Expertenwissen einbringt.

Aus der EP 2 687 922 A2 ist eine Weiterentwicklung dieses Prinzips bekannt, bei der die Anwendungsvorschrift, dort die Kennlinienfelder (kurz Kennfelder), auf dem Feld bei der Durchführung einer landwirtschaftlichen Arbeitsaufgabe sukzessive verbessert wird, indem unterschiedliche Arbeitspunkte angefahren werden, um den Einfluss des lokalen Kontextes (Wetter, Klima, Fruchtarten, Bodenarten, etc.) auf die theoretischen Kennlinienfelder zu berücksichtigen.

Aus der EP 2 728 523 A1 ist eine landwirtschaftliche Arbeitsmaschine nach dem Oberbegriff des Anspruchs 1 bekannt.

Problematisch bei der sukzessiven Optimierung der Arbeitsparameter hinsichtlich des lokalen Kontextes ist, dass diese eine gewisse Zeit benötigt, beispielsweise 30 Minuten, um die Kennfelder so weit zu ermitteln oder zu parametrieren, dass anschließend für diverse Änderungen beispielsweise des Feldbestandes optimierte Arbeitsparameter aus den Kennfeldern ermittelt werden können. Dafür kann die landwirtschaftliche Arbeitsmaschine zum Beispiel mehrere nicht-optimierte Arbeitspunkte, also Kombinationen von Arbeitsparametern, durchlaufen, um so Stützstellen des Kennfeldes oder der Kennfelder zu ermitteln. Während dieser Optimierungsroutine läuft die landwirtschaftliche Arbeitsmaschine also mit wechselnden und nicht optimalen Einstellungen von Arbeitsparametern.

Es ist eine Herausforderung, schneller und/oder effizienter zu optimierten Arbeitsparametern zu gelangen.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Indem die landwirtschaftliche Arbeitsmaschine zur optimierten Ermittlung von Arbeitsparametern eingerichtet ist und zumindest ein Fahrerassistenzsystem und eine Sensoranordnung umfasst, wobei die landwirtschaftliche Arbeitsmaschine weiter eingerichtet ist, eine landwirtschaftliche Arbeitsaufgabe in einem lokalen Kontext durchzuführen und das Fahrerassistenzsystem eine Kennfeldsteuerung umfasst, wobei die Kennfeldsteuerung ein oder mehrere Kennfelder umfasst und jedes Kennfeld eingerichtet ist, Arbeitsparameter der Prozessaggregate der landwirtschaftlichen Arbeitsmaschine zu optimieren und das jeweilige Kennfeld zumindest den Zusammenhang von Arbeitsparametern eines Prozessaggregats und Qualitätsparametern durch Initialarbeitspunkte beschreibt und das oder die Kennfelder als Basiskennfelder ausgebildet sind und das Fahrerassistenzsystem eingerichtet ist bei Durchführung einer landwirtschaftliche Arbeitsaufgabe in einem lokalen Kontext zu prüfen, ob ein kontextbezogenes Kennfeld verfügbar ist und bei Verfügbarkeit eines solchen das Basiskennfeld durch das kontextbezogene Kennfeld zur Ermittlung optimierter Arbeitsparameter ersetzt und die Kennfeldsteuerung weiter eingerichtet ist das kontextbezogene Kennfeld als Initialkennfelder anzuwenden wird sichergestellt, dass eine schnelle und effiziente Optimierung von Arbeitsparametern der landwirtschaftlichen Arbeitsmaschine möglich wird. Dies wird insbesondere dadurch erreicht, dass ein in der landwirtschaftlichen Arbeitsmaschine hinterlegtes Basiskennfeld durch ein auf den spezifischen Kontext bezogenes Kennfeld ersetzt wird, sodass die landwirtschaftliche Arbeitsmaschine den Optimierungsprozess mit einem auf einen bestimmten Kontext besser angepassten Kennfeld startet und schneller zu optimierten Werten der zu optimierenden Arbeitsparameter gelangt.

In einer vorteilhaften Ausgestaltung der Erfindung ist dem Fahrerassistenzsystem, insbesondere der Kennfeldsteuerung, ein Modellgütemodul zugeordnet ist, wobei das Modellgütemodul eine Modellgüte des kontextbezogenen Kennfelds definiert, vorzugsweise dass die Modellgüte die Zeitspanne ermittelt bis die aus der gewählten Strategievorgabe resultierenden optimierten Arbeitsparameter erreicht sind. Dies hat insbesondere den Effekt, dass die Qualität der mittels der Kennfeldsteuerung erreichten Optimierung der Arbeitsparameter überprüfbar wird.

Damit in diesem Zusammenhang der Rechenaufwand für das Ersetzen eines Basiskennfeldes durch ein kontextbezogenes Kennfeld die Leistungsperformance der vorhandenen Rechenvorrichtung nicht überfordert, ist in einer vorteilhaften Weiterbildung der Erfindung vorgesehen, dass der Modellgüte ein Schwellwert zugeordnet ist und bei Erreichen des Schwellwertes das Basiskennfeld durch das kontextbezogene Kennfeld überschrieben wird.

In einer vorteilhaften Ausgestaltung der Erfindung ist das Fahrerassistenzsystem und insbesondere die ihm zugeordnete Kennfeldsteuerung so beschaffen, dass das angewendete kontextbezogene Kennfeld immer dann überprüft wird, wenn sich bei Durchführung einer landwirtschaftlichen Arbeitsaufgabe in einem lokalen Kontext die Bedingungen des lokalen Kontextes ändern, wobei das angewendete kontextbezogene Kennfeld dann durch ein angepasstes kontextbezogenes Kennfeld ersetzt wird insbesondere wenn der Schwellwert der Modellgüte des Modellgütemoduls erreicht wird. Dies hat insbesondere den Effekt, dass auf sich im Tagesverlauf deutlich ändern Bedingungen, welche eine signifikante auch sprunghafte Verschlechterung der Modellgüte zur Folge haben besser reagiert werden kann.

In einer weiteren vorteilhaften Ausgestaltung der Erfindung ist das Fahrerassistenzsystem und insbesondere die ihm zugeordnete Kennfeldsteuerung so beschaffen, dass das angewendete kontextbezogene Kennfeld immer dann überprüft wird, wenn die landwirtschaftliche Arbeitsmaschine in denselben Bedingungen an einem Folgetag eingesetzt wird, wobei das angewendete kontextbezogene Kennfeld dann durch ein angepasstes kontextbezogenes Kennfeld ersetzt wird, insbesondere wenn der Schwellwert der Modellgüte des Modellgütemoduls erreicht wird. Dies hat insbesondere den Effekt, dass sich täglich ändernde Erntebedingungen, welche einen unmittelbaren Einfluss auf die Optimierung der Arbeitsparameter haben, besser berücksichtigt werden.

In einer vorteilhaften Weiterbildung der Erfindung ist das Fahrerassistenzsystem und insbesondere die ihm zugeordnete Kennfeldsteuerung so beschaffen, dass das angewendete kontextbezogene Kennfeld immer dann überprüft wird, wenn das kontextbezogene Kennfeld in denselben Bedingungen zeitgleich oder am Folgetag zwischen verschiedenen landwirtschaftlichen Arbeitsmaschinen ausgetauscht werden soll, wobei das angewendete kontextbezogene Kennfeld dann durch ein angepasstes kontextbezogenes Kennfeld ersetzt wird, insbesondere wenn der Schwellwert der Modellgüte des Modellgütemoduls erreicht wird. Dies hat insbesondere den Effekt, dass sich täglich ändernde Erntebedingungen und die sich von landwirtschaftlicher Arbeitsmaschine zu landwirtschaftlicher Arbeitsmaschine ändernden Bedingungen, welche einen unmittelbaren Einfluss auf die Optimierung der Arbeitsparameter haben, besser berücksichtigt werden. In diesem Zusammenhang ist es von Vorteil, wenn die verschiedenen Arbeitsmaschinen Arbeitsmaschinen einer Maschinenflotte oder Arbeitsmaschinen verschiedener Maschinenflotten umfassen, sodass das erfindungsgemäße Fahrerassistenzsystem universell einsetzbar ist.

Eine weitere vorteilhafte Ausgestaltung der Erfindung ergibt sich dann, wenn das Fahrerassistenzsystem und insbesondere die ihm zugeordnete Kennfeldsteuerung so beschaffen ist, dass das angewendete kontextbezogene Kennfeld immer dann überprüft wird, wenn das kontextbezogene Kennfeld zwischen landwirtschaftlichen Arbeitsmaschinen ausgetauscht werden soll, die in verschiedenen Regionen im Einsatz sind, wobei das angewendete kontextbezogene Kennfeld dann durch ein angepasstes kontextbezogenes Kennfeld ersetzt wird, insbesondere wenn der Schwellwert der Modellgüte des Modellgütemoduls erreicht wird. Dies hat insbesondere den Effekt, dass sich regionenspezifisch ändernde Erntebedingungen, welche einen unmittelbaren Einfluss auf die Optimierung der Arbeitsparameter haben, besser berücksichtigt werden.

Eine vorteilhafte Weiterbildung der Erfindung ergibt sich auch dann, wenn das Fahrerassistenzsystem und insbesondere die ihm zugeordnete Kennfeldsteuerung so beschaffen ist, dass das angewendete kontextbezogene Kennfeld immer dann überprüft wird, wenn das kontextbezogene Kennfeld zwischen landwirtschaftlichen Arbeitsmaschinen ausgetauscht werden soll, die zu verschiedenen Zeiten eines Jahres eingesetzt werden, wobei die verschiedenen Zeiten eines Jahres die verschiedenen desselben Jahres oder verschiedener Jahre umfassen, wobei das angewendete kontextbezogene Kennfeld dann durch ein angepasstes kontextbezogenes Kennfeld ersetzt wird, insbesondere wenn der Schwellwert der Modellgüte des Modellgütemoduls erreicht wird. Dies hat insbesondere den Effekt, dass sich jahreszeitenspezifisch ändernde Erntebedingungen, welche einen unmittelbaren Einfluss auf die Optimierung der Arbeitsparameter haben, besser berücksichtigt werden.

Indem in einer vorteilhaften Weiterbildung der Erfindung eine Steueranordnung zur Verteilung optimierter kontextbezogener Kennfelder vorgesehen ist, wobei die Steueranordnung eine Datenbank mit hinterlegten Strategieparametern und zugeordneten Daten zu lokalen Kontexten aufweist und die hinterlegten Strategieparameter von Fahrerassistenzsystemen landwirtschaftlicher Arbeitsmaschinen in Optimierungsroutinen bei der Durchführung landwirtschaftlicher Arbeitsaufgaben in lokalen Kontexten aus Initialstrategieparametern sukzessive zur Anpassung an den jeweiligen lokalen Kontext optimiert wurden, wobei das Fahrerassistenzsystem Kontextdaten des lokalen Kontextes der landwirtschaftlichen Arbeitsaufgabe, insbesondere mittels der Sensoranordnung, ermittelt und an die Steueranordnung übermittelt, dass die Steueranordnung basierend auf einem Abgleich der empfangenen Kontextdaten mit den Kontextdaten aus der Datenbank an den lokalen Kontext angepasste kontextbezogene Kennfelder ermittelt und an das Fahrerassistenzsystem der landwirtschaftlichen Arbeitsmaschine übermittelt und dass das Fahrerassistenzsystem die übermittelten kontextbezogenen Kennfelder als Basiskennfelder anwendet, wird sichergestellt, dass mittels wenig störanfälligen Datenübertragungssystemen die schnellere und/oder effizientere Optimierung der Arbeitsparametern der landwirtschaftlichen Arbeitsmaschine möglich wird.

Eine kostengünstige Begrenzung der Rechenleistung einer landwirtschaftlichen Arbeitsmaschine wird in diesem Zusammenhang dann erreicht, wenn die Steueranordnung extern zu der landwirtschaftlichen Arbeitsmaschine angeordnet ist, insbesondere, dass die Steueranordnung von einem oder mehreren Servern gebildet wird und über das Internet mit der landwirtschaftlichen Arbeitsmaschine kommuniziert, und/oder, dass in der Datenbank eine Vielzahl von Strategieparameter hinterlegt sind, die von anderen, insbesondere gleichartigen, landwirtschaftlichen Arbeitsmaschinen stammen.

Eine besonders effizient arbeitende landwirtschaftliche Arbeitsmaschine ergibt sich dann, wenn die landwirtschaftliche Arbeitsmaschine zur optimierten Ermittlung von Arbeitsparametern der landwirtschaftlichen Arbeitsmaschine eingerichtet ist, wobei die landwirtschaftliche Arbeitsmaschine ein Fahrerassistenzsystem und eine Sensoranordnung aufweist, wobei die landwirtschaftliche Arbeitsmaschine eingerichtet ist, eine landwirtschaftliche Arbeitsaufgabe in einem lokalen Kontext durchzuführen, wobei das Fahrerassistenzsystem eingerichtet ist, in einer Ermittlungsroutine mittels einer parametrierbaren Strategie optimierte Arbeitsparameter für die landwirtschaftliche Arbeitsmaschine zur Durchführung der landwirtschaftlichen Arbeitsaufgabe zu ermitteln, wobei die Strategie Strategievorgaben, eine Anwendungsvorschrift und die optimierten Arbeitsparameter umfasst, und wobei die Strategie durch Strategieparameter zur Anpassung an einen lokalen Kontext parametrierbar ist, wobei das Fahrerassistenzsystem eingerichtet ist, in der Ermittlungsroutine die Strategievorgaben als Eingangsparameter der Anwendungsvorschrift zu verwenden, um die optimierten Arbeitsparameter hinsichtlich der Strategievorgaben optimiert als Ausgangsparameter der Anwendungsvorschrift zu ermitteln und wobei das Fahrerassistenzsystem eingerichtet ist, zu Beginn der Durchführung der landwirtschaftlichen Arbeitsaufgabe die Strategie mit Initialstrategieparametern zu parametrieren, um die optimierten Arbeitsparameter zu ermitteln und die Strategie mindestens ein Kennfeld umfasst und dass das Fahrerassistenzsystem mittels der Anwendungsvorschrift die optimierten Arbeitsparameter basierend auf den Strategievorgaben aus dem Kennfeld oder den Kennfeldern ermittelt, wobei das Kennfeld als ein Basiskennfeld und/oder als ein kontextbezogenes Kennfeld ausgebildet ist.

Weitere vorteilhafte Ausgestaltungen sind Gegenstand weiterer Unteransprüche und werden nachfolgend an Hand in mehreren Figuren dargestellter Ausführungsbeispiele beschrieben.

Es zeigen:
- Figur 1: die landwirtschaftliche Arbeitsmaschine mit erfindungsgemäßem Assistenzsystem in einer schematischen Darstellung
- Figur 2: eine Detaildarstellung des erfindungsgemäßen Assistenzsystems
- Figur 3: eine weitere Detaildarstellung des erfindungsgemäßen Assistenzsystems

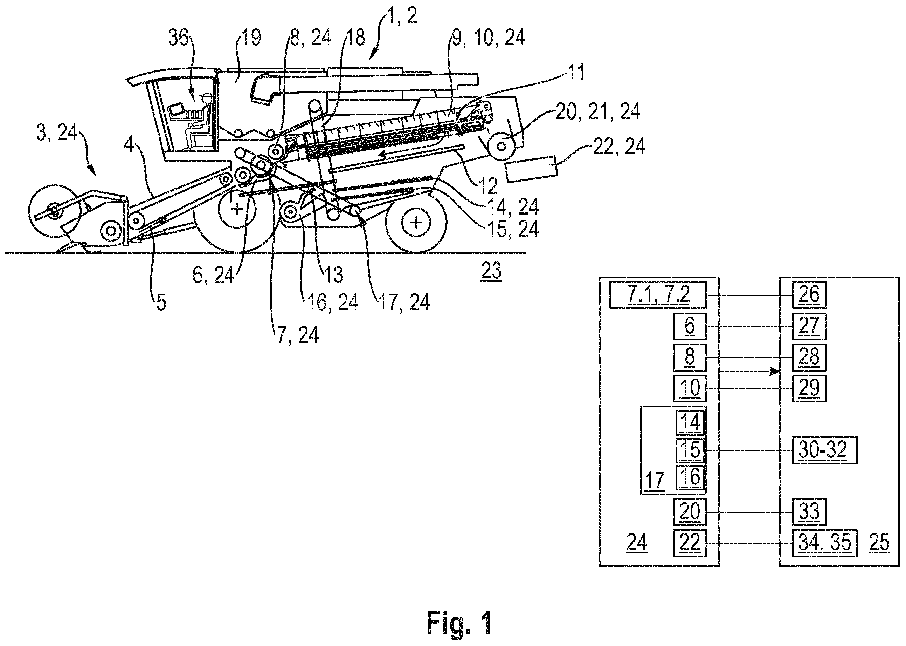

Die erfindungsgemäße Lösung lässt sich auf einen weiten Bereich landwirtschaftlicher Arbeitsmaschinen 1, insbesondere auf Erntemaschinen, anwenden. Derartige landwirtschaftliche Arbeitsmaschinen 1 werden für eine Vielzahl unterschiedlicher landwirtschaftlicher Arbeitsaufgaben verwendet. Beispielhaft zeigt Fig. 1 eine als Mähdrescher 2 ausgeführte landwirtschaftliche Arbeitsmaschine 1 bei einer Erntetätigkeit.

Bei diesen landwirtschaftlichen Arbeitsaufgaben können an den landwirtschaftlichen Arbeitsmaschinen 1 ganz unterschiedliche Arbeitsparameter eingestellt werden.

Der in Figur 1 schematisch dargestellte Mähdrescher 2 nimmt in seinem frontseitigen Bereich einen Erntevorsatz 3 auf, welcher in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 5 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Abscheiderotoranordnung 9 ausgeführte Trenneinrichtung 10 übergeben wird. Es liegt im Rahmen der Erfindung, dass die Trenneinrichtung 10 auch als an sich bekannter und deshalb nicht dargestellter Hordenschüttler ausgeführt sein kann. Auch liegt es im Rahmen der Erfindung, dass die Trenneinrichtung einrotorig oder zweirotorig ausgeführt ist oder die Dreschorgane 7 und die Trenneinrichtung 10 zu einer ein- oder zweirotorigen Axialflussdresch- und Trenneirichtung zusammengefasst sind.

In der Trenneinrichtung 10 wird der Gutstrom 5 so gefördert, dass in dem Gutstrom 5 enthaltene freibewegliche Körner 11 im untenseitigen Bereich der Trenneinrichtung 10 abgeschieden werden. Sowohl die am Dreschkorb 6 als auch in der Trenneinrichtung 10 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben.

Im rückwärtigen Bereich kann der Trenneinrichtung 10 zudem eine einen Strohhäcksler 20 umfassende Zerkleinerungseinrichtung 21 zugeordnet sein. Zudem kann im Austrittsbereich des Strohhäckslers 20 eine Gutverteileinrichtung 22 positioniert sein, welche das aus dem Mähdrescher 2 herausgeförderte Restmaterial auf dem Boden 23 verteilt.

Der Erntevorsatz 3, die Dreschorgane 7, der Dreschkorb 6, die Umlenktrommel 8, die Trenneinrichtung 10, die Reinigungseinrichtung 17 und hier speziell die Siebebenen 14, 15 und das Gebläse 16, die Zerkleinerungseinrichtung 21, hier der Strohhäcksler 20 und die Gutverteileinrichtung 22 bilden die Prozessaggregate 24. Weiter können die Arbeitsparameter 25 dieser Prozessaggregate 24 vorzugsweise die Folgenden sein:
Die Dreschorgane 7 können von einer Vielzahl von Dreschtrommeln 7.1, 7.2 gebildet werden und der Arbeitsparameter 25 bildet die jeweilige Dreschtrommeldrehzahl 26. Der Arbeitsparameter 25 des Dreschkorbes 6 kann beispielsweise dessen sogenannte Dreschspaltweite 27 sein. Der Arbeitsparameter 25 der den Dreschorganen 7 zugeordneten Umlenktrommel 8 kann deren Drehzahl 28 sein. Je nach konkreter Ausführung der Trenneinrichtung 10 können deren Arbeitsparameter 25 ganz unterschiedlich beschaffen sein. Aus dem Stand der Technik sind hier etwa die jeweilige Rotordrehzahl 29 oder die hier nicht dargestellten Öffnungsweiten des Abscheidemantels der Trenneinrichtung 10 bekannt. Die Arbeitsparameter 25 der Reinigungseinrichtung 17 können die Schwingfrequenz- und Schwingungsrichtung 30, 31 der Siebebenen 14, 15 und die Drehzahl 32 des Gebläses 16 umfassen. Der Arbeitsparameter 25 des Strohhäckslers 20 kann beispielsweise auf die Drehzahl 33 der hier nicht näher dargestellten Häckslerwelle beschränkt sein. Die Arbeitsparameter 25 der Gutverteileinrichtung 22 können in an sich bekannter und daher hier nicht näher beschriebenen Weise die Drehzahl 34 der nicht näher dargestellten Auswurforgane und der Abgabepunkt 35 des Restmaterialstroms aus der Gutverteileinrichtung 22 sein.

Weiter umfasst die landwirtschaftliche Arbeitsmaschine 1 ein Fahrerassistenzsystem 36 zur Ansteuerung des Erntevorsatzes 3 und des Mähdreschers 2.

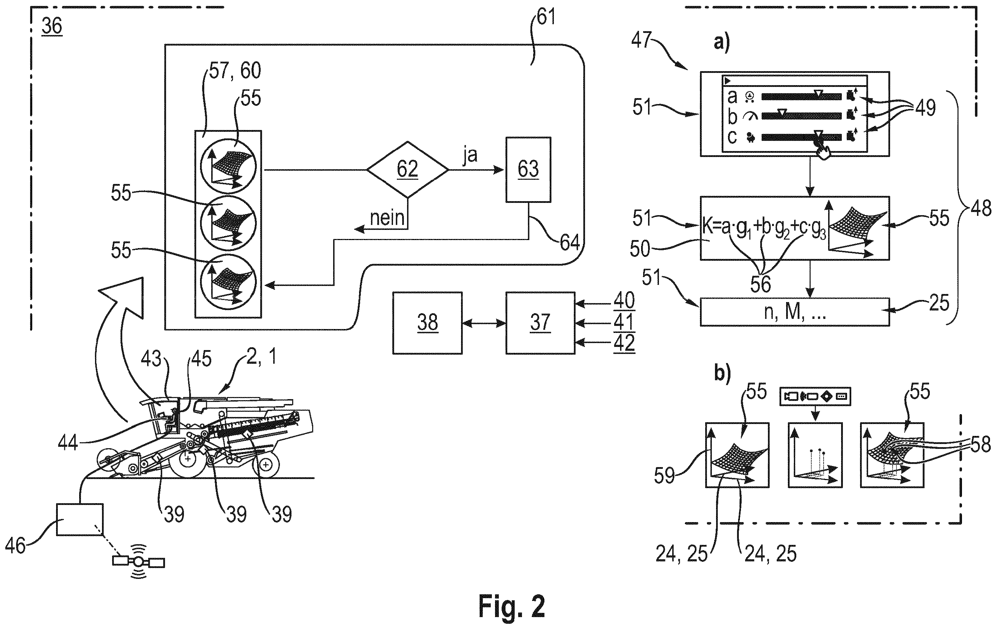

Das Fahrerassistenzsystem 36 umfasst gemäß Figur 2 einen Speicher 37 zum Hinterlegen von noch näher zu erläuternden Daten und eine Rechenvorrichtung 38 zur Verarbeitung der in dem Speicher 37 hinterlegten Daten. Die in dem Speicher 37 hinterlegten Daten können zunächst von maschineninternen Sensorsystemen 39 generierte Informationen 40, von externen Systemen generierte Information 41 und unmittelbar in der Rechenvorrichtung 37 hinterlegte Informationen 42 umfassen. Das Fahrerassistenzsystem 36 kann über eine in der Kabine 43 des Mähdreschers 2 angeordnete Bedien- und Anzeigeneinheit 44 betrieben werden. Grundsätzlich ist das Fahrerassistenzsystem 36 dazu eingerichtet, einen Fahrer 45 des Mähdreschers 2 bei der Bedienung des Mähdreschers 2 zu unterstützen.

Auf diese Weise ist die landwirtschaftliche Arbeitsmaschine 1 zunächst eingerichtet die Ermittlung von Arbeitsparametern 25 der landwirtschaftlichen Arbeitsmaschine 1 zu optimieren, wobei hierfür das Fahrerassistenzsystem 36 im Zusammenspiel mit den maschineninternen Sensorsystemen 39 die entscheidende Bedeutung zukommt. Die so beschaffene landwirtschaftliche Arbeitsmaschine 1 ist damit eingerichtet, dass sie eine landwirtschaftliche Arbeitsaufgabe, hier das Abernten eines Feldes, in einem lokalen Kontext 61, auf einem bestimmten Feld in einer bestimmten Region, durchführen kann. Bei dem lokalen Kontext 61 handelt es sich um alle Einflussgrößen, die grundsätzlich am Ort der Durchführung der landwirtschaftlichen Arbeitsaufgabe, also lokal, vorhanden sind und die Einfluss auf das Ergebnis der landwirtschaftlichen Arbeitsaufgabe nehmen. Soweit der Begriff hier verwendet wird, meint der lokale Kontext 61 allerdings nur jenen Anteil dieser Einflussgrößen, der der landwirtschaftlichen Arbeitsmaschine 1, insbesondere dem Fahrerassistenzsystem 36, und/oder der noch zu erläuternden Steueranordnung 46 auch bekannt ist. Die Einflussgrößen können gemessen werden, jedoch auch beispielsweise von einem Wetterdienst bezogen werden. Der lokale Kontext 61 umfasst hier und vorzugsweise das Wetter und/oder das Klima und/oder eine Fruchtart und/oder -sorte und/oder Erntebedingungen wie eine Stroh- oder Kornfeuchte und/oder gewählte Pflanzenschutzmaßnahmen und/oder einen Abreifungsgrad und/oder eine Bodenbeschaffenheit. Zusätzlich kann eine Maschinenausstattung berücksichtigt werden. Zur Ermittlung des lokalen Kontextes 61 können GPS-Daten verwendet werden.

Das Fahrerassistenzsystem 36 ermittelt nun in einer Ermittlungsroutine 47 mittels einer parametrierbaren Strategie 48 optimierte Arbeitsparameter 25 für die landwirtschaftliche Arbeitsmaschine 1 zur Durchführung der landwirtschaftlichen Arbeitsaufgabe. Dieser Vorgang ist abstrakt in Fig. 2 a) dargestellt und wird im Weiteren noch erläutert. Die Strategie 48 umfasst Strategievorgaben 49, eine Anwendungsvorschrift 50 und die optimierten Arbeitsparameter 25. Ganz allgemein ist die Strategie 48 durch Strategieparameter 51 zur Anpassung an einen lokalen Kontext 61 parametrierbar, wie ebenfalls noch erläutert wird. In der Ermittlungsroutine 47 verwendet das Fahrerassistenzsystem 36 die Strategievorgaben 49 als Eingangsparameter der Anwendungsvorschrift 50, um die optimierten Arbeitsparameter 25 als Ausgangsparameter der Anwendungsvorschrift 50 zu ermitteln. Die optimierten Arbeitsparameter 25 sind dabei hinsichtlich der Strategievorgaben 49 optimiert.

Um nun bei einer neuen landwirtschaftlichen Arbeitsaufgabe die optimierten Arbeitsparameter 25 zu ermitteln, parametriert das Fahrerassistenzsystem 36 zu Beginn der Durchführung der landwirtschaftlichen Arbeitsaufgabe die Strategie 48 mit Initialstrategieparametern. Die Initialstrategieparameter können bei der Durchführung der landwirtschaftlichen Arbeitsaufgabe noch angepasst werden. Strategievorgaben 49 können abstrakte Strategien 48 und/oder Gewichtungen von Qualitätsparametern 59 umfassen. Die abstrakten Strategien 48 umfassen hier und vorzugsweise eine maschinenschonende Strategie 48 mit geringem Verschleiß der autonomen landwirtschaftlichen Arbeitsmaschine 1 und/oder einen Eco-Modus mit geringem Energieverbrauch aber längerer Arbeitszeit und/oder ein schnelles Abarbeiten mit höherem Treibstoffverbrauch, und/oder eine höhere Erntequalität mit höherem Zeitaufwand und/oder einen hohen Durchsatz mit geringerer Erntequalität. Die Qualitätsparameter 59 umfassen vorzugsweise konkurrierende Qualitätsparameter 59, für die der Nutzer, wie in Fig. 2 beispielhaft für drei Qualitätsparameter 59 dargestellt, eine Gewichtung grafisch einstellen kann. Die grafische Anzeige visualisiert dabei die Konkurrenz der Qualitätsparameter 59. Bei der Optimierung handelt es sich folglich um eine Mehrzieloptimierung. Hier und vorzugsweise werden die Strategievorgaben 49 vom Nutzer vorgegeben.

Der Definition des jeweiligen Qualitätsparameters 59 kommt vorliegend besondere Bedeutung zu. Hier und vorzugsweise ist jeder Qualitätsparameter 59 ganz allgemein durch eine Zielvorgabe der Optimierung oder der Einstellung eines Arbeitsparameters definiert. Der Begriff "Optimierung" kann im einfachsten Fall die Maximierung oder Minimierung des jeweiligen Arbeitsparameters umfassen. Der Begriff "Einstellung" bedeutet, dass der jeweilige Arbeitsparameter einen speziellen Wert einnehmen soll und das Fahrerassistenzsystem 36 die Arbeitsparameter dahingehend optimiert, dass dieser Wert, nach Möglichkeit, eingenommen wird. Die Qualitätsparameter 59 können vorzugsweise gewählt sein aus der Liste umfassend "Ausdrusch", "Bruchkornanteil", "Abscheideverluste", "Reinigungsverluste", "Schlupf Dreschwerk-Antrieb", "Kraftstoffverbrauch", "Durchsatz", "Sauberkeit" und "Strohqualität". Ein Arbeitsparameter 25 kann zum Beispiel auch eine Fahrgeschwindigkeit oder ein Erntedurchsatz sein. Die Arbeitsparameter 25 stellen sich durch das Zusammenwirken von maschinenbezogenen Arbeitsparametern 25 mit den lokalen Gegebenheiten ein.

Wesentlich ist nun, dass das Fahrerassistenzsystem 36 als Initialstrategieparameter Strategieparameter 51 verwendet, die von mindestens einer landwirtschaftlichen Arbeitsmaschine 1 in einem ähnlichen lokalen Kontext 61 bereits optimiert wurden. Die Initialstrategieparameter können dabei von einer landwirtschaftlichen Arbeitsmaschine 1 optimiert worden sein oder Strategieparameter 51 mehrerer landwirtschaftlicher Arbeitsmaschinen 1 können miteinander verknüpft werden. Initialstrategieparameter sind Strategieparameter 51, die zu Beginn der Durchführung der landwirtschaftlichen Arbeitsaufgabe verwendet werden, um die Strategie 48 zu parametrisieren. In einer bevorzugten Ausgestaltung umfassen die Initialstrategieparameter Initial-Koeffizienten 56 von Kennfeldern 55 der Anwendungsvorschrift 50, wie noch erläutert wird. Diese Initial-Koeffizienten 56 werden verwendet, um initiale Kennfelder 55 zu parametrisieren. Die initialen Kennfelder 55 werden zu Beginn der Durchführung der landwirtschaftlichen Arbeitsaufgabe verwendet. Insgesamt betrifft der Begriff "initial" vorliegend also immer den Beginn einer landwirtschaftlichen Arbeitsaufgabe. Statt dass die landwirtschaftliche Arbeitsmaschine 1 nun also mit einer Standardkonfiguration losfährt, nutzt sie Initialstrategieparameter, die eine höhere Chance haben, näher an und schneller zu einem Optimum der Arbeitsparameter 25 zu führen. Die Strategieparameter 51 können Strategievorgaben 49, Koeffizienten 56 von Kennfeldern 55 und dergleichen umfassen. Die optimierten Arbeitsparameter 25 werden vom Fahrerassistenzsystem 36 an der landwirtschaftlichen Arbeitsmaschine 1 eingestellt und zur Durchführung mindestens eines Teils der landwirtschaftlichen Arbeitsaufgabe verwendet.

Das eine oder die mehreren in dem Fahrerassistenzsystem 36 hinterlegten Kennfelder 55 bilden die dem Fahrerassistenzsystem 36 zugeordnete Kennfeldsteuerung 57. Wie beschrieben ist jedes Kennfeld 55 eingerichtet, Arbeitsparameter 25 der Prozessaggregate 24 der landwirtschaftlichen Arbeitsmaschine 1 zu optimieren, wobei das jeweilige Kennfeld 55 zumindest den Zusammenhang von Arbeitsparametern 25 eines Prozessaggregats 24 und Qualitätsparametern 59 durch Initialarbeitspunkte 58 beschreibt.

Erfindungsgemäß sind die dem Fahrerassistenzsystem 36 der landwirtschaftlichen Arbeitsmaschine 1, im Ausführungsbeispiel dem Mähdrescher 2, zugeordneten Kennfelder 55 zunächst als Basiskennfelder 60 ausgebildet, wobei das Fahrerassistenzsystem 36 eingerichtet ist bei Durchführung einer landwirtschaftlichen Arbeitsaufgabe in einem lokalen Kontext 61 in einem Prüfschritt 62 zu prüfen, ob ein kontextbezogenes parametrisiertes Kennfeld 63 verfügbar ist oder nicht. Ist ein kontextbezogenes Kennfeld 63 nicht verfügbar werden das oder die hinterlegten Basiskennfelder 60 genutzt. Bei Verfügbarkeit eines oder mehrerer kontextbezogener Kennfelder 63 werden das oder die hinterlegten Basiskennfelder 60 durch das oder die kontextbezogenen Kennfelder 63 zur Ermittlung optimierter Arbeitsparameter 25 ersetzt, sodass die Kennfeldsteuerung 57 eingerichtet ist das oder die kontextbezogenen Kennfelder 63 als Initialkennfelder 64 anzuwenden.

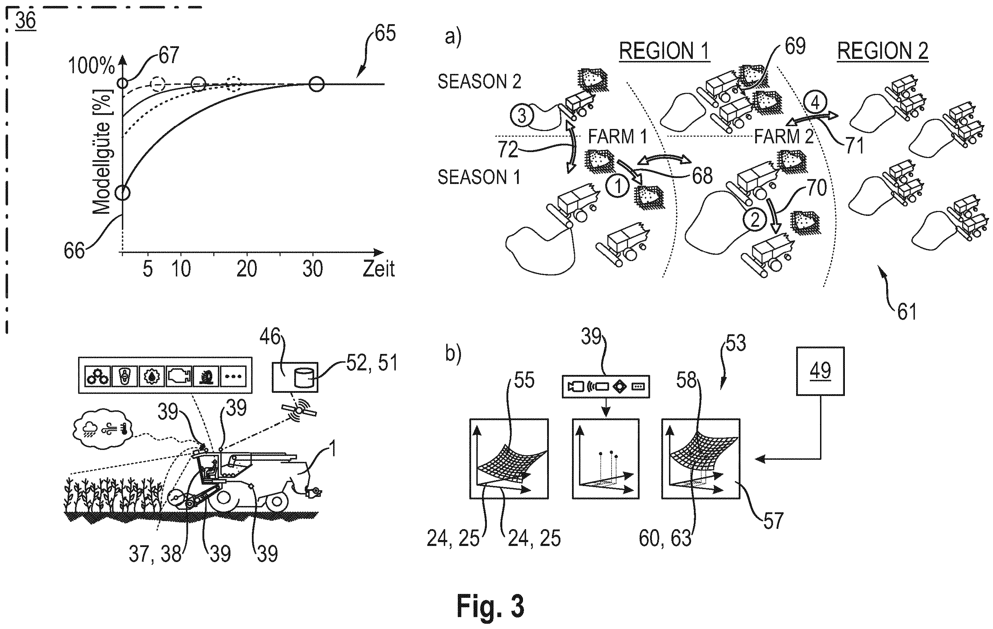

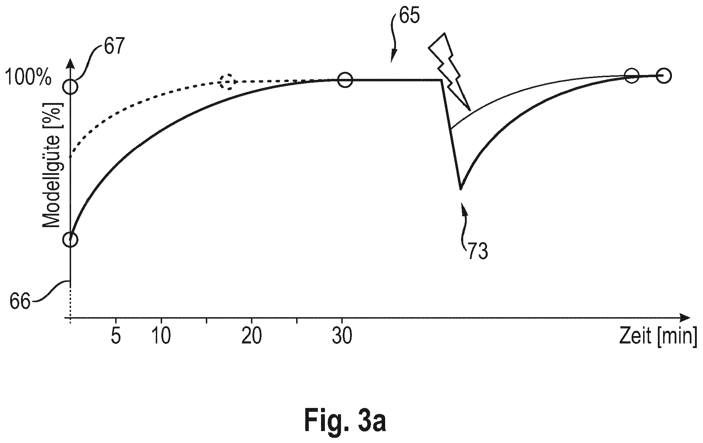

Fig. 3 beschreibt weitere Details des erfindungsgemäßen Fahrerassistenzsystems 36. Wesentlich für die Umsetzung der beschriebenen Kennfeldsteuerung 57 mittels des Fahrerassistenzsystems 36 ist die bereits erwähnte Steueranordnung 46. Diese Steueranordnung 46 kann grundsätzlich Teil der landwirtschaftlichen Arbeitsmaschine 1, insbesondere des Fahrerassistenzsystems 36, sein. Hier und vorzugsweise ist sie jedoch extern dazu angeordnet. Im Folgenden wird der bevorzugte Ablauf des Verfahrens unter Verwendung einer Steueranordnung 46 erläutert. Die Steueranordnung 46 weist eine Datenbank 52 mit den hinterlegten Strategieparametern 51 und zugeordneten Daten zu lokalen Kontexten 61 auf. Die Datenbank 52 kann Teil der Steueranordnung 46 oder extern dazu angeordnet sein. Die hinterlegten Strategieparameter 51 wurden von Fahrerassistenzsystemen 36 landwirtschaftlicher Arbeitsmaschinen 1 in Optimierungsroutinen 53 bei der Durchführung landwirtschaftlicher Arbeitsaufgaben in lokalen Kontexten 61 aus Initialstrategieparametern sukzessive zur Anpassung an den jeweiligen lokalen Kontext 61 optimiert. Es kann sich dabei um historische und/oder tagesaktuelle Daten handeln, die prinzipiell aus der Nähe oder von der ganzen Welt stammen können.

Hier und vorzugsweise ermittelt das Fahrerassistenzsystem 36 Kontextdaten des lokalen Kontextes 61 der landwirtschaftlichen Arbeitsaufgabe, insbesondere mittels der Sensorsysteme 39, und übermittelt diese an die Steueranordnung 46. Zusätzlich oder alternativ kann die Steueranordnung 46 die Kontextdaten auch selbst ermitteln, insbesondere aus GPS-Daten der landwirtschaftlichen Arbeitsmaschine 1. Das Ermitteln kann sich auch auf ein reines Auswählen beschränken. Hier und vorzugsweise werden jedoch Mittelwerte einer Vielzahl von Initialstrategieparametern aus ähnlichen Kontexten gebildet oder diese anderweitig verknüpft und als Initialstrategieparameter übermittelt. Bei der Mittelwertbildung können die Initialstrategieparametern aus ähnlichen Kontexten gewichtet werden, vorzugsweise abhängig von einer Vertrauenswürdigkeit der Daten und/oder einem Ähnlichkeitsindex. Die Steueranordnung 46 ermittelt basierend auf einem Abgleich der empfangenen Kontextdaten mit den Kontextdaten aus der Datenbank 52 an den lokalen Kontext 61 angepasste Initialstrategieparameter und übermittelt diese an das Fahrerassistenzsystem 36 der landwirtschaftlichen Arbeitsmaschine 1.

Wie bereits beschrieben ermittelt die landwirtschaftliche Arbeitsmaschine 1 während der Durchführung der landwirtschaftlichen Arbeitsaufgabe, insbesondere zu Beginn der Durchführung der landwirtschaftlichen Arbeitsaufgabe, in einer von dem Fahrerassistenzsystem 36 gesteuerten Optimierungsroutine 53 mittels der Sensoranordnung 39 die Erzielung der Strategievorgaben 49 betreffende Sensordaten. Das Fahrerassistenzsystem 36 optimiert in der Optimierungsroutine 53 die Initialstrategieparameter basierend auf den Sensordaten sukzessive was letztlich zu optimierten Arbeitsparameter 25 führt. Auf diese Art und Weise werden die Initialstrategieparameter als Startpunkt der Optimierungsroutine 53 verwendet, wodurch zu Beginn der Optimierungsroutine 53 bessere Ergebnisse erzielt werden. Auch wird ermöglicht, dass die Optimierungsroutine 53 verkürzt werden kann.

Zusätzlich kann eine Übertragung von Initialstrategieparametern und deren Verwendung analog zur beschriebenen Verwendung in späteren Phasen der Durchführung der landwirtschaftlichen Arbeitsaufgabe vorgesehen sein. Insbesondere kann die landwirtschaftliche Arbeitsmaschine 1 ihre eigene Performance mit der Performance anderer landwirtschaftlicher Arbeitsmaschinen 1 vergleichen und abhängig von der Performance erneut Initialstrategieparameter einer anderen landwirtschaftlicher Arbeitsmaschine 1 verwenden. Anschließend kann optional erneut eine Optimierungsroutine 53 durchgeführt werden.

Es kann vorgesehen sein, dass das Fahrerassistenzsystem 36 anschließend die so optimierten Strategieparameter 51 und die Kontextdaten an die Steueranordnung 46 überträgt. Der Benutzer stellt hier und vorzugsweise die Strategievorgaben 49 und/oder Optimierungskriterien ein. Grundsätzlich kann trotzdem auch vorgesehen sein, dass er tiefer in das System eingreift und sogar Arbeitsparameter 25 einzeln einstellt. Weiter ist hier und vorzugsweise vorgesehen, dass das Fahrerassistenzsystem 36 in der Optimierungsroutine 53 verschiedene Arbeitsparameter 25 einstellt, die Initialarbeitspunkte 58 des jeweiligen Kennfelds 55 oder der Kennfelder 55 bilden. Das Fahrerassistenzsystem 36 stellt die optimierten Arbeitsparameter 25 der Initialstrategieparameter initial als optimierte Arbeitsparameter 25 an der landwirtschaftlichen Arbeitsmaschine 1 ein indem wie bereits beschrieben, das jeweils hinterlegte Basiskennfeld 60 durch das ermittelte kontextbezogene Kennfeld 63 ersetzt wird.

In einer vorteilhaften Ausgestaltung der Erfindung kann vorgesehen sein, dass dem Fahrerassistenzsystem 36 und insbesondere der Kennfeldsteuerung 57 ein Modellgütemodul 65 zugeordnet ist in welchem eine Modellgüte 66 des kontextbezogenen Kennfelds 63 definiert wird, vorzugsweise dass die Modellgüte 66 die Zeitspanne ermittelt bis die aus der gewählten Strategievorgabe 49 resultierenden optimierten Arbeitsparameter 25 erreicht worden sind. Dies hat zunächst den Vorteil, dass die Qualität der mittels der Kennfeldsteuerung 57 erreichten Optimierung der Arbeitsparameter 25 überprüfbar wird. Damit in diesem Zusammenhang der Rechenaufwand für das Ersetzen eines Basiskennfeldes 60 durch ein kontextbezogenes Kennfeld 63 die Leistungsperformance der vorhanden Rechenvorrichtung 38 nicht überfordert ist zudem in einer vorteilhaften Ausgestaltung vorgesehen, dass der Modellgüte 66 ein Schwellwert 67 zugeordnet ist und bei Erreichen des Schwellwertes 67 das Basiskennfeld 60 durch das kontextbezogene Kennfeld 63 überschrieben wird.

Das Fahrerassistenzsystem 36 und insbesondere die ihm zugeordnete Kennfeldsteuerung 57 ist zudem so beschaffen, dass das angewendete kontextbezogene Kennfeld 63 immer dann überprüft wird, wenn sich bei Durchführung einer landwirtschaftlichen Arbeitsaufgabe in einem lokalen Kontext 61 die Bedingungen des lokalen Kontextes 61 ändern, wobei das angewendete kontextbezogene Kennfeld 63 dann durch ein angepasstes kontextbezogenes Kennfeld 63 ersetzt wird, insbesondere wenn der Schwellwert 67 der Modellgüte 66 des Modellgütemoduls 65 erreicht wird. Gemäß Figur 3a können sich die Bedingungen in einem lokalen Kontext 61 im Tagesverlauf so deutlich ändern, dass die Modelgüte 66 eine signifikante auch sprunghafte Verschlechterung 73 erfährt. Ursachen hierfür können u.a. aufziehende Bewölkung, einsetzender Tau, Fruchtsortenwechsel, geänderte Dünge- und Pflanzenschutzmaßnahmen, sich ändernder Unkrautbewuchs, Schwankungen im Abreifegrad des Erntegutes und Ertragsänderungen sein.

Das Fahrerassistenzsystem 36 und insbesondere die ihm zugeordnete Kennfeldsteuerung 57 ist zudem so beschaffen, dass das angewendete kontextbezogene Kennfeld 63 immer dann überprüft wird, wenn die landwirtschaftliche Arbeitsmaschine 1 in denselben Bedingungen an einem Folgetag 68 eingesetzt wird, wobei das angewendete kontextbezogene Kennfeld 63 dann durch ein angepasstes kontextbezogenes Kennfeld 63 ersetzt wird, wenn der Schwellwert 67 der Modellgüte 66 erreicht wird.

Das Fahrerassistenzsystem 36 und insbesondere die ihm zugeordnete Kennfeldsteuerung 57 kann weiter so beschaffen sein, dass das angewendete kontextbezogene Kennfeld 63 immer dann überprüft wird, wenn das kontextbezogene Kennfeld 63 in denselben Bedingungen zeitgleich 69 oder am Folgetag 70 zwischen verschiedenen landwirtschaftlichen Arbeitsmaschinen ausgetauscht werden soll, wobei das angewendete kontextbezogene Kennfeld 63 dann durch ein angepasstes kontextbezogenes Kennfeld 63 ersetzt wird, wenn der Schwellwert 67 der Modellgüte 66 erreicht wird. Es liegt in diesem Zusammenhang im Rahmen der Erfindung, dass die verschiedenen Arbeitsmaschinen 1 Arbeitsmaschinen 1 einer Maschinenflotte oder Arbeitsmaschinen 1 verschiedener Maschinenflotten umfassen.

Zudem kann das Fahrerassistenzsystem 36 und insbesondere die ihm zugeordnete Kennfeldsteuerung 57 so beschaffen sein, dass das angewendete kontextbezogene Kennfeld 63 immer dann überprüft wird, wenn das kontextbezogene Kennfeld 63 zwischen landwirtschaftlichen Arbeitsmaschinen 1 ausgetauscht werden soll, die in verschiedenen Regionen 71 im Einsatz sind, wobei das angewendete kontextbezogene Kennfeld 63 dann durch ein angepasstes kontextbezogenes Kennfeld 63 ersetzt wird, wenn der Schwellwert 67 der Modellgüte 66 erreicht wird.

Weiter kann das Fahrerassistenzsystem 36 und insbesondere die ihm zugeordnete Kennfeldsteuerung 57 so beschaffen sein, dass das angewendete kontextbezogene Kennfeld 63 immer dann überprüft wird, wenn das kontextbezogene Kennfeld 63 zwischen landwirtschaftlichen Arbeitsmaschinen 1 ausgetauscht werden soll, die zu verschiedenen Zeiten eines Jahres 72 eingesetzt werden, wobei die verschiedenen Zeiten 72 die Zeiten 72 desselben Jahres oder verschiedener Jahre umfassen, wobei das angewendete kontextbezogene Kennfeld 63 dann durch ein angepasstes kontextbezogenes Kennfeld 63 ersetzt wird, wenn der Schwellwert 67 der Modellgüte 66 erreicht wird. Auf diese Weise wird auch der Einfluss von zeitiger oder später in einem Jahr stattfindenden Ernten auf das Ernteergebnis berücksichtigt.

Weiter ist vorgesehen, dass die bereits beschriebene Steueranordnung 46 zur Verteilung der optimierten kontextbezogener Kennfelder 63 vorgesehen ist, wobei die Steueranordnung 46 eine Datenbank 52 mit hinterlegten Strategieparametern 51 und zugeordneten Daten zu lokalen Kontexten 61 aufweist, dass die hinterlegten Strategieparameter 51 von Fahrerassistenzsystemen 36 landwirtschaftlicher Arbeitsmaschinen 1 in Optimierungsroutinen 53 bei der Durchführung landwirtschaftlicher Arbeitsaufgaben in lokalen Kontexten 61 aus Initialstrategieparametern 51 sukzessive zur Anpassung an den jeweiligen lokalen Kontext 61 optimiert wurden, und dass das Fahrerassistenzsystem 36 Kontextdaten des lokalen Kontextes 61 der landwirtschaftlichen Arbeitsaufgabe, insbesondere mittels der Sensorsysteme 39, ermittelt und an die Steueranordnung 46 übermittelt, dass die Steueranordnung 46 basierend auf einem Abgleich der empfangenen Kontextdaten mit den Kontextdaten aus der Datenbank 52 an den lokalen Kontext 61 angepasste kontextbezogene Kennfelder 63 ermittelt und an das Fahrerassistenzsystem 36 der landwirtschaftlichen Arbeitsmaschine 1 übermittelt und dass das Fahrerassistenzsystem 36 die übermittelten kontextbezogenen Kennfelder 63 als Basiskennfelder 60 anwendet.

Besonders effizient kann die Steueranordnung 46 dann eingesetzt werden, wenn die Steueranordnung 46 extern zu der landwirtschaftlichen Arbeitsmaschine 1 angeordnet ist, insbesondere, dass die Steueranordnung 46 von einem oder mehreren Servern gebildet wird und über das Internet mit der landwirtschaftlichen Arbeitsmaschine 1 kommuniziert, und/oder, dass in der Datenbank 52 eine Vielzahl von Strategieparametern 51 hinterlegt sind, die von anderen, insbesondere gleichartigen, landwirtschaftlichen Arbeitsmaschinen 1 stammen.

**Bezugszeichenliste:**

| | | | |
|---|---|---|---|
| 1 | landwirtschaftliche Arbeitsmaschine | 34 | Drehzahl Verteileinrichtung |
| 2 | Mähdrescher | 35 | Abgabepunkt Verteileinrichtung |
| 3 | Erntevorsatz | 36 | Fahrerassistenzsystem |
| 4 | Schrägförderer | 37 | Speicher |
| 5 | Erntegutstrom | 38 | Rechenvorrichtung |
| 6 | Dreschkorb | 39 | Sensorsystem |
| 7 | Dreschorgan | 40 | interne Informationen |
| 8 | Umlenktrommel | 41 | externe Informationen |
| 9 | Abscheiderotoranordnung | 42 | hinterlegte Informationen |
| 10 | Trenneinrichtung | 43 | Kabine |
| 11 | Körner | 44 | Bedien- und Anzeigeneinheit |
| 12 | Rücklaufboden | 45 | Fahrer |
| 13 | Zuführboden | 46 | Steueranordnung |
| 14 | Siebebene | 47 | Ermittlungsroutine |
| 15 | Siebebene | 48 | parametrierbare Strategie |
| 16 | Gebläse | 49 | Strategievorgabe |
| 17 | Reinigungseinrichtung | 50 | Anwendungsvorschrift |
| 18 | Elevator | 51 | Strategieparameter |
| 19 | Korntank | 52 | Datenbank |
| 20 | Strohhäcksler | 53 | Optimierungsroutine |
| 21 | Zerkleinerungseinrichtung | 54 | |
| 22 | Gutverteileinrichtung | 55 | Kennfeld |
| 23 | Boden | 56 | Koeffizient |
| 24 | Prozessaggregat | 57 | Kennfeldsteuerung |
| 25 | Arbeitsparameter | 58 | Initialarbeitspunkt |
| 26 | Dreschtrommeldrehzahl | 59 | Qualitätsparameter |
| 27 | Dreschspalt | 60 | Basiskennfeld |
| 28 | Umlenktrommeldrehzahl | 61 | lokaler Kontext |
| 29 | Rotordrehzahl | 62 | Prüfschritt |
| 30 | Schwingfrequenz- und -richtung | 63 | kontextbezogenes Kennfeld |
| 31 | Schwingfrequenz- und -richtung | 64 | Initialkennfeld |
| 32 | Drehzahl Gebläse | 65 | Modellgütemodul |
| 33 | Drehzahl Strohhäcksler | 66 | Modellgüte |
| 67 | Schwellwert | | |
| 68 | Folgetag | | |
| 69 | zeitgleich | | |
| 70 | Folgetag | | |
| 71 | Regionen | | |
| 72 | Zeiten eines Jahres | | |
| 73 | Verschlechterung der Modellgüte | | |

## Patentansprüche

1. Landwirtschaftliche Arbeitsmaschine (1) eingerichtet zur optimierten Ermittlung von Arbeitsparametern (25) der landwirtschaftlichen Arbeitsmaschine (1), wobei die landwirtschaftliche Arbeitsmaschine (1) ein Fahrerassistenzsystem (36) und ein Sensorsystem (39) aufweist, wobei die landwirtschaftliche Arbeitsmaschine (1) eingerichtet ist, eine landwirtschaftliche Arbeitsaufgabe in einem lokalen Kontext (61) durchzuführen und das Fahrerassistenzsystem (36) eine Kennfeldsteuerung (57) umfasst, wobei die Kennfeldsteuerung (57) ein oder mehrere Kennfelder (55) umfasst und jedes Kennfeld (55) eingerichtet ist, Arbeitsparameter (25) der Prozessaggregate (24) der landwirtschaftlichen Arbeitsmaschine (1) zu optimieren, wobei das jeweilige Kennfeld (55) zumindest den Zusammenhang von Arbeitsparametern (25) eines Prozessaggregats (24) und Qualitätsparametern (59) durch Initialarbeitspunkte (58) beschreibt
**dadurch gekennzeichnet, dass**
das oder die Kennfelder (55) als Basiskennfelder (60) ausgebildet sind und das Fahrerassistenzsystem (36) eingerichtet ist bei Durchführung einer landwirtschaftlichen Arbeitsaufgabe in einem lokalen Kontext (61) zu prüfen, ob ein kontextbezogenes Kennfeld (63) verfügbar ist und bei Verfügbarkeit eines solchen das Basiskennfeld (60) durch das kontextbezogene Kennfeld (63) zur Ermittlung optimierter Arbeitsparameter (25) ersetzt und die Kennfeldsteuerung (57) weiter eingerichtet ist das kontextbezogene Kennfeld (63) als Initialkennfeld (64) anzuwenden.

2. Landwirtschaftliche Arbeitsmaschine (1) nach Anspruch 1,
**dadurch gekennzeichnet, dass**
dem Fahrerassistenzsystem (36), insbesondere der Kennfeldsteuerung (57) ein Modellgütemodul (65) zugeordnet ist und der Modellgütemodul (65) eine Modellgüte (66) des kontextbezogenen Kennfelds (63) definiert, vorzugsweise dass die Modellgüte (66) die Zeitspanne ermittelt bis die aus der gewählten Strategievorgabe (49) resultierenden optimierten Arbeitsparameter (25) erreicht sind.

3. Landwirtschaftliche Arbeitsmaschine (1) nach Anspruch 2,
**dadurch gekennzeichnet, dass**
für der Modellgüte (66) ein Schwellwert (67) zugeordnet ist und bei Erreichen des Schwellwertes (67) das Basiskennfeld (60) durch das kontextbezogene Kennfeld (63) überschrieben wird.

4. Landwirtschaftliche Arbeitsmaschine (1) nach einem der vorhergehenden Ansprüche, **dadurch gekennzeichnet, dass**
das Fahrerassistenzsystem (36) und insbesondere die ihm zugeordnete Kennfeldsteuerung (57) so beschaffen ist, dass das angewendete kontextbezogene Kennfeld (63) immer dann überprüft wird, wenn sich bei Durchführung einer landwirtschaftlichen Arbeitsaufgabe in einem lokalen Kontext (61) die Bedingungen des lokalen Kontextes (61) ändern, wobei das angewendete kontextbezogene Kennfeld (63) dann durch ein angepasstes kontextbezogenes Kennfeld (63) ersetzt wird, insbesondere wenn der Schwellwert (67) der Modellgüte (66) des Modellgütemoduls (65) erreicht wird.

5. Landwirtschaftliche Arbeitsmaschine (1) nach einem der vorhergehenden Ansprüche, **dadurch gekennzeichnet, dass**
das Fahrerassistenzsystem (36) und insbesondere die ihm zugeordnete Kennfeldsteuerung (57) so beschaffen ist, dass das angewendete kontextbezogene Kennfeld (63) immer dann überprüft wird, wenn die landwirtschaftliche Arbeitsmaschine (1) in denselben Bedingungen an einem Folgetag (68) eingesetzt wird, wobei das angewendete kontextbezogene Kennfeld (63) dann durch ein angepasstes kontextbezogenes Kennfeld (63) ersetzt wird, insbesondere wenn der Schwellwert (67) der Modellgüte (66) des Modellgütemoduls (65) erreicht wird.

6. Landwirtschaftliche Arbeitsmaschine (1) nach einem der vorhergehenden Ansprüche, **dadurch gekennzeichnet, dass**
das Fahrerassistenzsystem (36) und insbesondere die ihm zugeordnete Kennfeldsteuerung (57) so beschaffen ist, dass das angewendete kontextbezogene Kennfeld (63) immer dann überprüft wird, wenn das kontextbezogene Kennfeld (63) in denselben Bedingungen zeitgleich (69) oder am Folgetag (70) zwischen verschiedenen landwirtschaftlichen Arbeitsmaschinen (1) ausgetauscht werden soll, wobei das angewendete kontextbezogene Kennfeld (63) dann durch ein angepasstes kontextbezogenes Kennfeld (63) ersetzt wird, insbesondere wenn der Schwellwert (67) der Modellgüte (66) des Modellgütemoduls (65) erreicht wird.

7. Landwirtschaftliche Arbeitsmaschine (1) nach Anspruch 6,
**dadurch gekennzeichnet, dass**
die verschiedenen Arbeitsmaschinen (1) Arbeitsmaschinen (1) einer Maschinenflotte oder Arbeitsmaschinen (1) verschiedener Maschinenflotten umfassen.

8. Landwirtschaftliche Arbeitsmaschine (1) nach einem der vorhergehenden Ansprüche, **dadurch gekennzeichnet, dass**
das Fahrerassistenzsystem (36) und insbesondere die ihm zugeordnete Kennfeldsteuerung (57) so beschaffen ist, dass das angewendete kontextbezogene Kennfeld (63) immer dann überprüft wird, wenn das kontextbezogene Kennfeld (63) zwischen landwirtschaftlichen Arbeitsmaschinen (1) ausgetauscht werden soll, die in verschiedenen Regionen (71) im Einsatz sind, wobei das angewendete kontextbezogene Kennfeld (63) dann durch ein angepasstes kontextbezogenes Kennfeld (63) ersetzt wird, insbesondere wenn der Schwellwert (67) der Modellgüte (66) des Modellgütemoduls (65) erreicht wird.

9. Landwirtschaftliche Arbeitsmaschine (1) nach einem der vorhergehenden Ansprüche, **dadurch gekennzeichnet, dass**
das Fahrerassistenzsystem (36) und insbesondere die ihm zugeordnete Kennfeldsteuerung (57) so beschaffen ist, dass das angewendete kontextbezogene Kennfeld (63) immer dann überprüft wird, wenn das kontextbezogene Kennfeld (63) zwischen landwirtschaftlichen Arbeitsmaschinen (1) ausgetauscht werden soll, die zu verschiedenen Zeiten eines Jahres (72) eingesetzt werden, wobei die verschiedenen Zeiten eines Jahres (72) die verschiedenen Zeiten (72) desselben Jahres oder verschiedener Jahre umfassen, wobei das angewendete kontextbezogene Kennfeld (63) dann durch ein angepasstes kontextbezogenes Kennfeld (63) ersetzt wird, insbesondere wenn der Schwellwert (67) der Modellgüte (66) des Modellgütemoduls (65) erreicht wird.

10. Landwirtschaftliche Arbeitsmaschine (1) nach einem der vorhergehenden Ansprüche, **dadurch gekennzeichnet, dass**
dass eine Steueranordnung (46) zur Verteilung optimierter kontextbezogener Kennfelder (63) vorgesehen ist, dass die Steueranordnung (46) eine Datenbank (52) mit hinterlegten Strategieparametern (51) und zugeordneten Daten zu lokalen Kontexten (61) aufweist, dass die hinterlegten Strategieparameter (51) von Fahrerassistenzsystemen (36) landwirtschaftlicher Arbeitsmaschinen (1) in Optimierungsroutinen (53) bei der Durchführung landwirtschaftlicher Arbeitsaufgaben in lokalen Kontexten (61) aus Initialstrategieparametern sukzessive zur Anpassung an den jeweiligen lokalen Kontext (61) optimiert wurden,
dass das Fahrerassistenzsystem (36) Kontextdaten des lokalen Kontextes (61) der landwirtschaftlichen Arbeitsaufgabe, insbesondere mittels des Sensorsystems (39), ermittelt und an die Steueranordnung (46) übermittelt, dass die Steueranordnung (46) basierend auf einem Abgleich der empfangenen Kontextdaten mit den Kontextdaten aus der Datenbank (52) an den lokalen Kontext (61) angepasste kontextbezogene Kennfelder (63) ermittelt und an das Fahrerassistenzsystem (36) der landwirtschaftlichen Arbeitsmaschine (1) übermittelt und dass das Fahrerassistenzsystem (36) die übermittelten kontextbezogenen Kennfelder (63) als Basiskennfelder (60) anwendet.

11. Landwirtschaftliche Arbeitsmaschine (1) nach einem der vorhergehenden Ansprüche, **dadurch gekennzeichnet, dass**
die Steueranordnung (46) extern zu der landwirtschaftlichen Arbeitsmaschine (1) angeordnet ist, insbesondere, dass die Steueranordnung (46) von einem oder mehreren Servern gebildet wird und über das Internet mit der landwirtschaftlichen Arbeitsmaschine (1) kommuniziert, und/oder, dass in der Datenbank (52) eine Vielzahl von Strategieparametern (51) hinterlegt sind, die von anderen, insbesondere gleichartigen, landwirtschaftlichen Arbeitsmaschinen (1) stammen.

12. Landwirtschaftliche Arbeitsmaschine (1) nach einem der vorhergehenden Ansprüche, **dadurch gekennzeichnet, dass**
das Fahrerassistenzsystem (36) eingerichtet ist, in einer Ermittlungsroutine (47) mittels einer parametrierbaren Strategie optimierte Arbeitsparameter für die landwirtschaftliche Arbeitsmaschine (1) zur Durchführung der landwirtschaftlichen Arbeitsaufgabe zu ermitteln, wobei die Strategie Strategievorgaben (49), eine Anwendungsvorschrift (50) und die optimierten Arbeitsparameter (25) umfasst, und wobei die Strategie durch Strategieparameter (51) zur Anpassung an einen lokalen Kontext (61) parametrierbar ist, wobei das Fahrerassistenzsystem (36) eingerichtet ist, in der Ermittlungsroutine (47) die Strategievorgaben (49) als Eingangsparameter der Anwendungsvorschrift (50) zu verwenden, um die optimierten Arbeitsparameter (25) hinsichtlich der Strategievorgaben (49) optimiert als Ausgangsparameter der Anwendungsvorschrift (50) zu ermitteln und wobei das Fahrerassistenzsystem (36) eingerichtet ist, zu Beginn der Durchführung der landwirtschaftlichen Arbeitsaufgabe die Strategie mit Initialstrategieparametern zu parametrieren, um die optimierten Arbeitsparameter (25) zu ermitteln, wobei die Strategie mindestens ein Kennfeld (55) umfasst und dass das Fahrerassistenzsystem (36) mittels der Anwendungsvorschrift (50) die optimierten Arbeitsparameter (25) basierend auf den Strategievorgaben (49) aus dem Kennfeld (55) oder den Kennfeldern (55) ermittelt, wobei das Kennfeld (55) als ein Basiskennfeld (60) und/oder als ein parametrisiertes Kennfeld (55) ausgebildet ist.

## Claims

1. Agricultural work machine (1) configured for the optimized determination of work parameters (25) of the agricultural work machine (1), wherein the agricultural work machine (1) has a driver assistance system (36) and a sensor system (39), wherein the agricultural work machine (1) is configured to carry out an agricultural work task in a local context (61) and the driver assistance system (36) comprises a characteristic map controller (57), wherein the characteristic map controller (57) comprises one or more characteristic maps (55) and each characteristic map (55) is configured to optimize work parameters (25) of the process units (24) of the agricultural work machine (1), wherein the respective characteristic map (55) describes at least the relationship between work parameters (25) of a process unit (24) and quality parameters (59) by means of initial working points (58),
**characterized in that**
the characteristic map(s) (55) is/are designed as basic characteristic maps (60) and the driver assistance system (36) is configured to check, when carrying out an agricultural work task in a local context (61), whether a context-related characteristic map (63) is available and, if such a map is available, replaces the basic characteristic map (60) with the context-related characteristic map (63) for the purpose of determining optimized work parameters (25), and the characteristic map controller (57) is further configured to use the context-related characteristic map (63) as the initial characteristic map (64).

2. Agricultural work machine (1) according to Claim 1,
**characterized in that**
the driver assistance system (36), in particular the characteristic map controller (57), is assigned a model quality module (65) and the model quality module (65) defines a model quality (66) of the context-related characteristic map (63), preferably **in that** the model quality (66) determines the time period until the optimized work parameters (25) resulting from the selected strategy specification (49) are achieved.

3. Agricultural work machine (1) according to Claim 2,
**characterized in that**
a threshold value (67) is assigned for the model quality (66) and, when the threshold value (67) is reached, the basic characteristic map (60) is overwritten with the context-related characteristic map (63).

4. Agricultural work machine (1) according to one of the preceding claims,
**characterized in that**
the driver assistance system (36), and in particular the characteristic map controller (57) assigned to it, is such that the context-related characteristic map (63) used is checked, when carrying out an agricultural work task in a local context (61), whenever the conditions of the local context (61) change, wherein the context-related characteristic map (63) used is then replaced with an adapted context-related characteristic map (63), in particular when the threshold value (67) of the model quality (66) of the model quality module (65) is reached.

5. Agricultural work machine (1) according to one of the preceding claims,
**characterized in that**
the driver assistance system (36), and in particular the characteristic map controller (57) assigned to it, is such that the context-related characteristic map (63) used is checked whenever the agricultural work machine (1) is used in the same conditions on a following day (68), wherein the context-related characteristic map (63) used is then replaced with an adapted context-related characteristic map (63), in particular when the threshold value (67) of the model quality (66) of the model quality module (65) is reached.

6. Agricultural work machine (1) according to one of the preceding claims,
**characterized in that**
the driver assistance system (36), and in particular the characteristic map controller (57) assigned to it, is such that the context-related characteristic map (63) used is checked whenever the context-related characteristic map (63) is intended to be exchanged between various agricultural work machines (1) in the same conditions at the same time (69) or on the following day (70), wherein the context-related characteristic map (63) used is then replaced with an adapted context-related characteristic map (63), in particular when the threshold value (67) of the model quality (66) of the model quality module (65) is reached.

7. Agricultural work machine (1) according to Claim 6,
**characterized in that**
the various work machines (1) comprise work machines (1) in a machine fleet or work machines (1) in various machine fleets.

8. Agricultural work machine (1) according to one of the preceding claims,
**characterized in that**
the driver assistance system (36), and in particular the characteristic map controller (57) assigned to it, is such that the context-related characteristic map (63) used is checked whenever the context-related characteristic map (63) is intended to be exchanged between agricultural work machines (1) which are being used in different regions (71), wherein the context-related characteristic map (63) used is then replaced with an adapted context-related characteristic map (63), in particular when the threshold value (67) of the model quality (66) of the model quality module (65) is reached.

9. Agricultural work machine (1) according to one of the preceding claims,
**characterized in that**
the driver assistance system (36), and in particular the characteristic map controller (57) assigned to it, is such that the context-related characteristic map (63) used is checked whenever the context-related characteristic map (63) is intended to be exchanged between agricultural work machines (1) which are used at different times of a year (72), wherein the different times of a year (72) comprise the different times (72) of the same year or of different years, wherein the context-related characteristic map (63) used is then replaced with an adapted context-related characteristic map (63), in particular when the threshold value (67) of the model quality (66) of the model quality module (65) is reached.

10. Agricultural work machine (1) according to one of the preceding claims,
**characterized in that**
a control arrangement (46) for distributing optimized context-related characteristic maps (63) is provided, **in that** the control arrangement (46) has a database (52) with stored strategy parameters (51) and associated data for local contexts (61), **in that** the stored strategy parameters (51) of driver assistance systems (36) of agricultural work machines (1) were gradually optimized in optimization routines (53) when carrying out agricultural work tasks in local contexts (61) from initial strategy parameters for adaptation to the respective local context (61),
**in that** the driver assistance system (36) determines context data relating to the local context (61) of the agricultural work task, in particular by means of the sensor system (39), and transmits said data to the control arrangement (46), **in that** the control arrangement (46) determines context-related characteristic maps (63) adapted to the local context (61) based on a comparison of the received context data with the context data from the database (52) and transits said characteristic maps to the driver assistance system (36) of the agricultural work machine (1), and **in that** the driver assistance system (36) uses the transmitted context-related characteristic maps (63) as basic characteristic maps (60).

11. Agricultural work machine (1) according to one of the preceding claims,
**characterized in that**
the control arrangement (46) is arranged outside the agricultural work machine (1), in particular **in that** the control arrangement (46) is formed by one or more servers and communicates with the agricultural work machine (1) via the Internet, and/or **in that** the database (52) stores a large number of strategy parameters (51) which come from other, in particular similar, agricultural work machines (1).

12. Agricultural work machine (1) according to one of the preceding claims,
**characterized in that**
the driver assistance system (36) is configured to determine optimized work parameters for the agricultural work machine (1) for carrying out the agricultural work task in a determination routine (47) by means of a parameterizable strategy, wherein the strategy comprises strategy specifications (49), an application rule (50) and the optimized work parameters (25), and wherein the strategy can be parameterized by means of strategy parameters (51) for adaptation to a local context (61), wherein the driver assistance system (36) is configured to use the strategy specifications (49) as input parameters of the application rule (50) in the determination routine (47) in order to determine the optimized work parameters (25) in an optimized manner with regard to the strategy specifications (49) as output parameters of the application rule (50), and wherein the driver assistance system (36) is configured, at the start of carrying out the agricultural work task, to parameterize the strategy with initial strategy parameters in order to determine the optimized work parameters (25), wherein the strategy comprises at least one characteristic map (55), and **in that** the driver assistance system (36) determines the optimized work parameters (25) based on the strategy specifications (49) from the characteristic map (55) or the characteristic maps (55) by means of the application rule (50), wherein the characteristic map (55) is formed as a basic characteristic map (60) and/or as a parameterized characteristic map (55).

## Revendications

1. Machine de travail agricole (1) agencée pour la détermination optimisée de paramètres de travail (25) de la machine agricole (1), ladite machine agricole (1) présentant un système d'aide à la conduite (36) et un système de capteurs (39), la machine agricole (1) étant agencée pour exécuter une tâche agricole dans un contexte local (61), et le système d'aide à la conduite (36) comportant une commande à diagrammes caractéristiques (57), ladite commande à diagrammes caractéristiques (57) comportant un ou plusieurs diagrammes caractéristiques (55) et chaque diagramme caractéristique (55) étant conçu pour optimiser des paramètres de travail (25) des organes de traitement (24) de la machine agricole (1), le diagramme caractéristique (55) respectif décrivant par des points de fonctionnement initiaux (58) au moins la relation de paramètres de travail (25) d'un organe de traitement (24) et de paramètres de qualité (59),
**caractérisée en ce que**
le ou les diagrammes caractéristiques (55) sont réalisés sous forme de diagrammes caractéristiques de base (60), et le système d'aide à la conduite (36) est conçu pour vérifier, lors de l'exécution d'une tâche agricole dans un contexte local (61), si un diagramme caractéristique relatif au contexte (63) est disponible et, en cas de disponibilité d'un tel diagramme, pour remplacer le diagramme caractéristique de base (60) par le diagramme caractéristique relatif au contexte (63), aux fins de déterminer des paramètres de travail (25) optimisés, et **en ce que** la commande à diagrammes caractéristiques (57) est en outre conçue pour appliquer le diagramme caractéristique relatif au contexte (63) en tant que diagramme caractéristique initial (64).

2. Machine de travail agricole (1) selon la revendication 1,
**caractérisée en ce que**
un module de qualité de modèle (65) est associé au système d'aide à la conduite (36), en particulier à la commande à diagrammes caractéristiques (57), et le module de qualité de modèle (65) définit une qualité de modèle (66) du diagramme caractéristique relatif au contexte (63), de préférence **en ce que** la qualité de modèle (66) détermine le laps de temps jusqu'à ce que les paramètres de travail (25) optimisés résultant de la consigne de stratégie (49) sélectionnée soient atteints.

3. Machine de travail agricole (1) selon la revendication 2,
**caractérisée en ce que**
une valeur seuil (67) est associée à la qualité de modèle (66) et, lorsque la valeur seuil (67) est atteinte, le diagramme caractéristique de base (60) est remplacé par le diagramme caractéristique relatif au contexte (63).

4. Machine de travail agricole (1) selon une des revendications précédentes,
**caractérisée en ce que**
le système d'aide à la conduite (36), et notamment la commande à diagrammes caractéristiques (57) qui lui est associée, est conçu(e) de manière à ce que le diagramme caractéristique relatif au contexte (63) appliqué soit vérifié chaque fois que les conditions du contexte local (61) varient lors de l'exécution d'une tâche agricole dans un contexte local (61), le diagramme caractéristique relatif au contexte (63) appliqué étant alors remplacé par un diagramme caractéristique relatif au contexte (63) adapté, notamment si la valeur seuil (67) de la qualité de modèle (66) du module de qualité de modèle (65) est atteinte.

5. Machine de travail agricole (1) selon une des revendications précédentes,
**caractérisée en ce que**
le système d'aide à la conduite (36), et notamment la commande à diagrammes caractéristiques (57) qui lui est associée, est conçu(e) de manière à ce que le diagramme caractéristique relatif au contexte (63) appliqué soit vérifié chaque fois que la machine agricole (1) est utilisée dans les mêmes conditions l'un des jours suivants (68), le diagramme caractéristique relatif au contexte (63) appliqué étant alors remplacé par un diagramme caractéristique relatif au contexte (63) adapté, notamment si la valeur seuil (67) de la qualité de modèle (66) du module de qualité de modèle (65) est atteinte.

6. Machine de travail agricole (1) selon une des revendications précédentes,
**caractérisée en ce que**
le système d'aide à la conduite (36), et notamment la commande à diagrammes caractéristiques (57) qui lui est associée, est conçu(e) de manière à ce que le diagramme caractéristique relatif au contexte (63) appliqué soit vérifié chaque fois que le diagramme caractéristique relatif au contexte (63) doit être échangé entre des machines agricoles (1) différentes dans les mêmes conditions, simultanément (69) ou le jour suivant (70), le diagramme caractéristique relatif au contexte (63) appliqué étant alors remplacé par un diagramme caractéristique relatif au contexte (63) adapté, notamment si la valeur seuil (67) de la qualité de modèle (66) du module de qualité de modèle (65) est atteinte.

7. Machine de travail agricole (1) selon la revendication 6,
**caractérisée en ce que**
les différentes machines de travail (1) englobent des machines de travail (1) d'un même parc de machines ou de machines de travail (1) de parcs de machines différents.

8. Machine de travail agricole (1) selon une des revendications précédentes,
**caractérisée en ce que**
le système d'aide à la conduite (36), et notamment la commande à diagrammes caractéristiques (57) qui lui est associée, est conçu(e) de manière à ce que le diagramme caractéristique relatif au contexte (63) appliqué soit vérifié chaque fois que le diagramme caractéristique relatif au contexte (63) doit être échangé entre des machines agricoles (1) qui interviennent dans des régions (71) différentes, le diagramme caractéristique relatif au contexte (63) appliqué étant alors remplacé par un diagramme caractéristique relatif au contexte (63) adapté, notamment si la valeur seuil (67) de la qualité de modèle (66) du module de qualité de modèle (65) est atteinte.

9. Machine de travail agricole (1) selon une des revendications précédentes,
**caractérisée en ce que**
le système d'aide à la conduite (36), et notamment la commande à diagrammes caractéristiques (57) qui lui est associée, est conçu(e) de manière à ce que le diagramme caractéristique relatif au contexte (63) appliqué soit vérifié chaque fois que le diagramme caractéristique relatif au contexte (63) doit être échangé entre des machines agricoles (1) qui interviennent à des périodes différentes d'une année (72), les périodes différentes d'une année (72) englobant les périodes (72) différentes d'une même année ou d'années différentes, le diagramme caractéristique relatif au contexte (63) appliqué étant alors remplacé par un diagramme caractéristique relatif au contexte (63) adapté, notamment si la valeur seuil (67) de la qualité de modèle (66) du module de qualité de modèle (65) est atteinte.

10. Machine de travail agricole (1) selon une des revendications précédentes,
**caractérisée en ce que**
un dispositif de commande (46) est prévu pour la répartition de diagrammes caractéristiques relatifs au contexte (63) optimisés, **en ce que** le dispositif de commande (46) présente une base de données (52) avec des paramètres de stratégie (51) enregistrés et des données associées à des contextes locaux (61), **en ce que** les paramètres de stratégie (51) enregistrés ont été optimisés par des systèmes d'aide à la conduite (36) de machines agricoles (1), dans des routines d'optimisation (53), lors de l'exécution de tâches agricoles dans des contextes locaux (61), à partir de paramètres de stratégie initiaux, successivement en vue d'une adaptation au contexte local (61) respectif,
**en ce que** le système d'aide à la conduite (36) détermine des données contextuelles du contexte local (61) de la tâche agricole, notamment au moyen du système de capteurs (39), et les transmet au dispositif de commande (46), **en ce que** le dispositif de commande (46) détermine des diagrammes caractéristiques relatifs au contexte (63) adaptés au contexte local (61), sur la base d'une comparaison des données contextuelles reçues avec les données contextuelles provenant de la base de données (52), et les transmet au système d'aide à la conduite (36) de la machine agricole (1), et **en ce que** le système d'aide à la conduite (36) applique les diagrammes caractéristiques relatifs au contexte (63) transmis, en tant que diagrammes caractéristiques de base (60).

11. Machine de travail agricole (1) selon une des revendications précédentes,
**caractérisée en ce que**
le dispositif de commande (46) est installé à l'extérieur de la machine agricole (1), notamment **en ce que** le dispositif de commande (46) est constitué d'un ou plusieurs serveurs et communique via Internet avec la machine agricole (1), et/ou **en ce que** sont enregistrés dans la base de données (52), une pluralité de paramètres de stratégie (51) qui proviennent d'autres machines agricoles (1), notamment de même type.

12. Machine de travail agricole (1) selon une des revendications précédentes,
**caractérisée en ce que**
le système d'aide à la conduite (36) est conçu pour déterminer, dans une routine de détermination (47), des paramètres de travail pour la machine agricole (1) optimisés au moyen d'une stratégie paramétrable, aux fins d'exécuter la tâche agricole, la stratégie comprenant des consignes de stratégie (49), une directive d'application (50) et les paramètres de travail (25) optimisés, et la stratégie pouvant être paramétrée par des paramètres de stratégie (51) en vue de l'adaptation à un contexte local (61), le système d'aide à la conduite (36) étant conçu pour utiliser, dans la routine de détermination (47), les consignes de stratégie (49) en tant que paramètres d'entrée de la directive d'application (50) pour déterminer les paramètres de travail (25) optimisés de manière optimisée par rapport aux consignes de stratégie (49), en tant que paramètres de sortie de la directive d'application (50), et le système d'aide à la conduite (36) étant conçu pour paramétrer, au début de l'exécution de la tâche agricole, la stratégie avec des paramètres de stratégie initiaux, aux fins de déterminer les paramètres de travail (25) optimisés, la stratégie comportant au moins un diagramme caractéristique (55), et **en ce que** le système d'aide à la conduite (36) détermine les paramètres de travail (25) optimisés au moyen de la directive d'application (50), sur la base des consignes de stratégie (49) provenant du diagramme caractéristique (55) ou des diagrammes caractéristiques (55), le diagramme caractéristique (55) étant réalisé comme diagramme caractéristique de base (60) et/ou comme diagramme caractéristique (55) paramétré.
